# EUROPEAN PATENT APPLICATION

(11) **EP 4 525 146 A1**
(43) Date of publication of application: **19.03.2025**
(21) Application number: 24185247.4
(22) Date of filing: 28.06.2024
(51) Int. Cl.: H01M 50/105, H01M 50/211, H01M 50/325, H01M 50/557, H01M 50/178, H01M 50/184, H01M 50/202, H01M 50/342

(54) **CELL UNIT, BATTERY PACK, AND ELECTRIC DEVICE**

(30) Priority: 30.06.2023 CN 202310796544
(71) Applicant: Xiamen Ampack Technology Limited, Xiamen City, Fujian Province 361000 (CN)
(72) Inventor: LI, Kunlong, Xiamen City, Fujian Province, People s Republic of China, 361000 (CN); WANG, Pengfei, Xiamen City, Fujian Province, People s Republic of China, 361000 (CN); NONG, Wenbin, Xiamen City, Fujian Province, People s Republic of China, 361000 (CN)
(74) Representative: Icosa

(57) **Abstract**

A cell unit (10) includes a cell (11) and a bracket (12). The cell (11) includes a cell housing (11a) and an electrode terminal (11c). The cell housing (11a) includes a body portion (111) and a first sealing part (112). The first sealing part (112) includes a first connection portion (112a). The bracket (12) includes a first portion (121). The first portion (121) covers a part of the first connection portion (112a). The first connection portion (112a) includes a first end face (1121). The first end face (1121) includes a first region (1121a). The first portion (121) includes a first section (121a) and a second section (121b). The first section (121a) covers a part of the first end face (1121) and a part of an outer surface of the first connection portion (112a). The second section (121b) is connected to the first section (121a), the first region (1121a) is located outside the second section (121b). When viewed along a second direction (Y), the first section (121a) and the second section (121b) form a notch (12a). The first region (1121a) is located in the notch (121b).

## Description

### TECHNICAL FIELD

This application relates to the field of energy storage technologies, and in particular, to a cell unit, a battery pack, and an electric device.

### BACKGROUND

In a cell of a battery pack, a cell housing is sealed by a sealing part. At present, the whole sealing part is typically enclosed by a bracket or protected through glue filling. However, this is not conducive to internal pressure relief of the cell and in turn affects the safety of the cell.

### SUMMARY

In view of this, it is necessary to provide a cell unit, a battery pack, and an electric device, to facilitate pressure relief and reduce influence on the safety of the cell.

An embodiment of this application provides a cell unit including a cell and a bracket. The cell includes an electrode assembly, a cell housing, and an electrode terminal. The electrode terminal is connected to the electrode assembly and is extends out of the cell housing. The cell housing includes a body portion and a first sealing part. The electrode assembly is disposed in the body portion. The first sealing part includes a first connection portion. The electrode terminal extends out of the cell housing from the first connection portion. The bracket includes a first portion. The first portion and the body portion are arranged along a first direction. The first portion covers a part of the first connection portion. The electrode terminal extends out of the first portion. The first connection portion includes a first end face. The first end face includes a first region. The first portion includes a first section and a second section. The first section covers a part of the first end face and a part of an outer surface of the first connection portion. The second section is connected to the first section, and the first region is located outside the second section. When viewed along a second direction, the first section and the second section form a notch. The notch is facing away from the body portion. The first region is located in the notch. The first direction is perpendicular to the second direction. In this application, the first portion covers a part of the first connection portion to enhance protection for the first sealing part and improve the airtightness of the cell. The first region is located in the notch, the second section is connected to the first section, and the first region is located outside the second section; and therefore, when the cell swells, pressure in the cell first causes an impact on the second section, making the second section protrude in a direction away from the first connection portion, and then the pressure in the cell can be relieved through the first region in the notch, thereby facilitating pressure relief and improving the safety of the cell unit.

Optionally, in some embodiments of this application, the first section includes a first subsection and a second subsection. The first subsection and the second subsection are spaced apart along a third direction. The second section connects the first subsection and the second subsection. The electrode terminal extends out of the second subsection. The first direction, the second direction, and the third direction are perpendicular to each other.

Optionally, in some embodiments of this application, when viewed along the second direction, the second section is disposed between the first region and the body portion, facilitating pressure relief along the first direction.

Optionally, in some embodiments of this application, the first sealing part includes a first folded portion and a second folded portion. The first connection portion connects the first folded portion and the second folded portion. The first folded portion and the second folded portion are spaced apart along the third direction. The bracket includes a first side portion and a second side portion arranged along the third direction. The first portion connects the first side portion and the second side portion. The first side portion covers the first folded portion. The second side portion covers the second folded portion. When viewed along the second direction, the first connection portion is partially located between the first side portion and the second side portion in the third direction. The bracket covers a part of the first sealing part to enhance protection for the first sealing part. The first connection portion is partially disposed between the body portion and the first portion and between the first side portion and the second side portion to provide an expansion space for the first sealing part, thereby facilitating pressure relief.

Optionally, in some embodiments of this application, along the third direction, a distance between the electrode terminal and the notch is L₁, and a distance between the electrode terminal and the first side portion is L₂, where L₁<1/2L₂. This reduces damage to the electrode terminal caused by air pressure relieved from the first region in the notch and reduces the risk of affecting connection to an adjacent electrode terminal.

Optionally, in some embodiments of this application, a distance L₃ between the notch and the electrode terminal is less than a distance L₄ between the notch and the first side portion, so that more heat is produced at the electrode terminal, further facilitating pressure relief.

Optionally, in some embodiments of this application, the second section includes a first segment and a second segment. Along the second direction, the first segment and the second segment are disposed on two sides of the first connection portion.

Optionally, in some embodiments of this application, the first segment and the second segment are configured to protrude in a direction away from the first connection portion when receiving pressure from inside of the cell, facilitating pressure relief.

Optionally, in some embodiments of this application, the first connection portion includes two second sections. When viewed along the second direction, the first section and the second section form two notches. In the third direction, the electrode terminal is located between the two notches. The provision of the two notches further facilitates pressure relief, further improving the safety of the cell unit.

Optionally, in some embodiments of this application, when viewed along the second direction, a width of the notch along the third direction gradually decreases along the first direction, which helps to increase an accommodating space of the notch, so that the notch can accommodate more of the first connection portion and first region, thereby further facilitating pressure relief and improving the safety of the cell unit.

Optionally, in some embodiments of this application, the body portion includes a first wall. The first connection portion is connected to the first wall. The bracket includes a second portion. The second portion covers a part of the first wall, facilitating protection for the first sealing part. The second portion is spaced apart from the second section, facilitating pressure relief.

Optionally, in some embodiments of this application, when viewed along the second direction, the second portion, the first portion, the first side portion, and the second side portion enclose a first space; and the first connection portion is partially located in the first space. A periphery of the first connection portion is protected by the first portion, the first side portion, the second side portion, and the second portion, thereby reducing influence of swelling of the cell on sealing performance of the first sealing part.

Optionally, in some embodiments of this application, when viewed along the second direction, the first space is a closed space, facilitating pressure relief of the cell.

Optionally, in some embodiments of this application, the bracket includes an insulating bracket, which can reduce the risk of a short circuit in the cell.

Optionally, in some embodiments of this application, the bracket is integrally formed with the cell, helping to enhance connection strength between the bracket and the cell.

Optionally, in some embodiments of this application, when viewed along the second direction, the first connection portion includes a first connection region connected to the first end face and located in the notch, facilitating pressure relief of the cell.

Optionally, in some embodiments of this application, when viewed along the second direction, the first connection portion includes a second connection region located in the first space. The first connection region is spaced apart from the second connection region, helping to improve pressure relief of the cell.

Optionally, in some embodiments of this application, the second section is U-shaped, facilitating pressure relief of the cell.

Optionally, in some embodiments of this application, when viewed along the second direction, the notch is a U-shaped structure, facilitating pressure relief of the cell.

Optionally, in some embodiments of this application, along the first direction, the second section exceeds the first section, so that when the cell swells, the pressure in the cell can act on the second section in advance, facilitating pressure relief.

Optionally, in some embodiments of this application, when viewed along a direction opposite to the second direction, the first section and the second section form a notch, the notch is facing away from the body portion, and the first region is located in the notch, facilitating pressure relief.

Optionally, in some embodiments of this application, along the first direction, the second section and the first section have a distance H, satisfying H≥2 mm, which helps the pressure in the cell to first act on the second section, thereby facilitating pressure relief.

Optionally, in some embodiments of this application, when viewed along the first direction, in the second direction, the second portion does not exceed the body portion. When adjacent cell housings are in contact connection, a gap is present between adjacent second portions, reducing influence of pressure mutually applied by the adjacent cell housings on the second portion and reducing an acting force on the first sealing part, thereby facilitating protection for the first sealing part and facilitating connection stability between the bracket and the cell.

Optionally, in some embodiments of this application, when viewed along the first direction, in the second direction, the first side portion does not exceed the body portion. The second side portion does not exceed the body portion. When adjacent cell housings are in contact connection, a gap is present between adjacent first side portions, and a gap is present between adjacent second side portions, reducing influence of pressure mutually applied by the adjacent cell housings on the first side portions and the second side portions and reducing an acting force on the first sealing part, thereby facilitating the protection for the first sealing part and facilitating the connection stability between the bracket and the cell.

An embodiment of this application further provides a battery pack including a housing and further including a plurality of cell units according to any one of the foregoing embodiments, where the plurality of cell units are disposed in the housing.

Optionally, in some embodiments of this application, the battery pack includes a sampling member connected to the electrode terminal. Along the first direction, a projection of the notch is spaced apart from a projection of the sampling member, thereby reducing influence on the sampling member during pressure relieving.

An embodiment of this application further provides an electric device, including the battery pack according to any one of the foregoing embodiments.

In the cell unit, battery pack, and electric device of this application, the first portion covers a part of the first connection portion to enhance the protection for the first sealing part and improve the airtightness of the cell. The first region is located in the notch, the second section is connected to the first section, and the first region is located outside the second section; and therefore, when the cell swells, pressure in the cell first causes an impact on the second section, making the second section protrude in a direction away from the first connection portion, and then the pressure in the cell can be relieved through the first region in the notch, thereby facilitating pressure relief and improving the safety of the cell unit.

### BRIEF DESCRIPTION OF DRAWINGS

FIG. 1 is a schematic structural diagram of a cell unit according to some embodiments.
FIG. 2 is a partially enlarged schematic structural diagram of the cell unit in FIG. 1.
FIG. 3 is a schematic structural diagram of the cell unit viewed along a second direction Y in FIG. 1.
FIG. 4 is a schematic structural diagram of the cell unit viewed along a direction Y' opposite to the second direction Y in FIG. 1.
FIG. 5 is a schematic structural diagram of a cell unit according to some other embodiments.
FIG. 6 is a schematic structural diagram of the cell unit viewed along a second direction Yin FIG. 5.
FIG. 7 is a partially enlarged schematic structural diagram of the cell unit in FIG. 6.
FIG. 8 is a schematic structural diagram of the cell unit viewed along a direction Y' opposite to the second direction Y in FIG. 5.
FIG. 9 is a schematic structural diagram of the cell unit in FIG. 5 from another perspective.
FIG. 10 is an enlarged schematic diagram of a partial structure in FIG. 9.
FIG. 11 is a schematic cross-sectional diagram of FIG. 9 along A-A.
FIG. 12 is an enlarged schematic diagram of a partial structure in FIG. 11.
FIG 13 is an enlarged schematic diagram of a second section in another state in FIG. 12.
FIG. 14 is a structural schematic diagram of a cell according to some embodiments.
FIG. 15 is a schematic exploded view of the cell in FIG. 14.
FIG. 16 is a structural schematic diagram of an electrode assembly according to some embodiments.
FIG. 17 is a schematic exploded view of a battery pack according to some embodiments.
FIG. 18 is a partial schematic structural diagram of a battery pack according to some embodiments.
FIG. 19 is a partial schematic structural diagram of the battery pack in FIG. 18 from another perspective.
FIG. 20 is a schematic structural diagram of an elastic member viewed along a direction X' opposite to a first direction X according to some embodiments.
FIG. 21 is a schematic structural diagram of a partial housing according to some embodiments.
FIG. 22 is a schematic structural diagram of an electric device according to some embodiments.

**Reference signs of main components:**

| | |
|---|---|
| battery pack | 100 |
| cell unit | 10 |
| Cell | 11 |
| cell housing | 11a |
| electrode assembly | 11b |
| electrode terminal | 11c |
| body portion | 111 |
| first housing | 111a |
| first recess | 1111 |
| second housing | 111b |
| first wall | 111c |
| second wall | 111d |
| third wall | 111e |
| fourth wall | 111f |
| fifth wall | 111g |
| sixth wall | 111h |
| second recess | 1112 |
| first extension side | 1113 |
| second extension side | 1114 |
| first straight section | 1115 |
| second straight section | 1116 |
| first bent section | 1117 |
| second bent section | 1118 |
| first sealing part | 112 |
| first connection portion | 112a |
| first connection region | 112a1 |
| second connection region | 112a2 |
| first end face | 1121 |
| first region | 1121a |
| second region | 1121b |
| first folded portion | 112b |
| second folded portion | 112c |
| second sealing part | 113 |
| Bracket | 12 |
| Notch | 12a |
| first space | 12b |
| first gap | 12c |
| second gap | 12d |
| third gap | 12e |
| first portion | 121 |
| first section | 121a |
| first subsection | 1211 |
| second subsection | 1212 |
| third subsection | 1213 |
| second section | 121b |
| first segment | 1214 |
| second segment | 1215 |
| first side portion | 122 |
| second side portion | 123 |
| second portion | 124 |
| first extension portion | 125 |
| second extension portion | 126 |
| Housing | 20 |
| left wall | 21 |
| right wall | 22 |
| front wall | 23 |
| rear wall | 24 |
| top wall | 25 |
| third limiting portion | 251 |
| fourth limiting portion | 252 |
| bottom wall | 26 |
| first limiting portion | 261 |
| second limiting portion | 262 |
| second fixing portion | 263 |
| elastic member | 30 |
| base portion | 31 |
| folded portion | 32 |
| first folded portion | 321 |
| first folded section | 321a |
| second folded section | 321b |
| second folded portion | 322 |
| third folded section | 322a |
| fourth folded section | 322b |
| first connection section | 323 |
| second connection section | 324 |
| sampling assembly | 40 |
| sampling member | 41 |
| sampling wire | 42 |
| circuit board | 50 |
| electric device | 200 |
| first direction | X |
| second direction | Y |
| third direction | Z |

This application is further described with reference to the accompanying drawings in the following some specific embodiments.

### DETAILED DESCRIPTION OF EMBODIMENTS

Some following specific embodiments are illustrative rather than restrictive, and are intended to provide basic understanding of this application but not to confirm critical or decisive elements or limit the protected scope of this application. As long as there is no structural conflict, the various technical features mentioned in all the embodiments can be combined in any manner.

When one component is assumed as being "disposed on/in" another component, the component may be disposed directly on/in the another component or with a component possibly present therebetween. When one component is assumed as being "connected to" another component, it may be connected to the another component directly or with a component possibly present therebetween.

It can be understood that the terms "perpendicular and equal to" are used to describe an ideal state of two components. During actual production or use, two components may be approximately perpendicular or equal to each other. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "being perpendicular" to each other may not be absolutely straight lines or planes, or may be approximately straight lines or planes. From a macroscopic perspective, the component can be considered as a "straight line" or "plane" as long as its overall extension direction is a straight line or a plane.

The term "parallel" is used to describe an ideal state of two components. During actual production or use, two components may be approximately parallel to each other. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "being parallel" to each other may not be absolutely straight lines or planes, or may be approximately straight lines or planes. From a macroscopic perspective, the component can be considered as a "straight line" or "plane" as long as its overall extension direction is a straight line or a plane.

Unless otherwise defined, the term "a plurality of" herein specifically indicates that there are two or more components when used to describe a quantity of components.

In the third direction Z, there is the third direction Z and a direction opposite to the third direction Z. In the first direction X, there is the first direction X and a direction opposite to the first direction X. In the second direction Y, there is the second direction Y and a direction opposite to the second direction Y

For ease of description, some electrode terminals 11c are not folded.

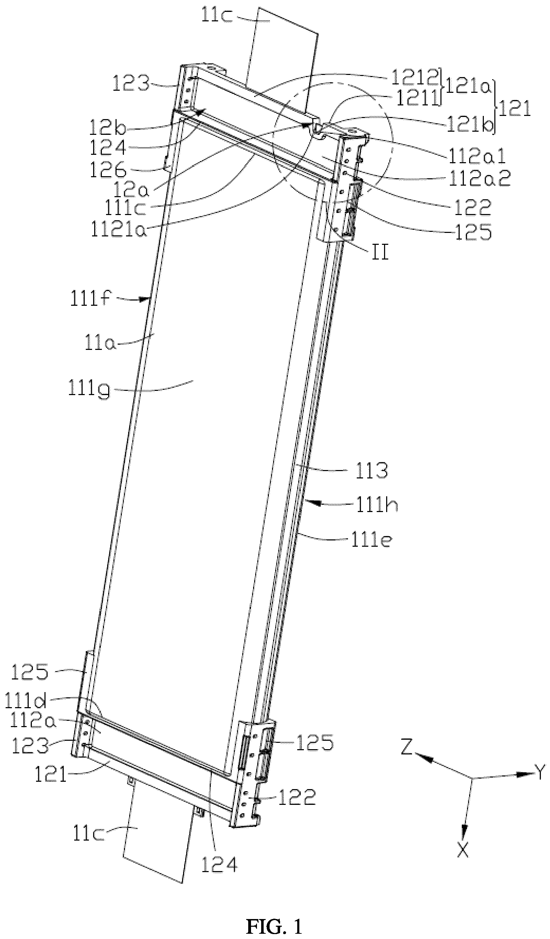

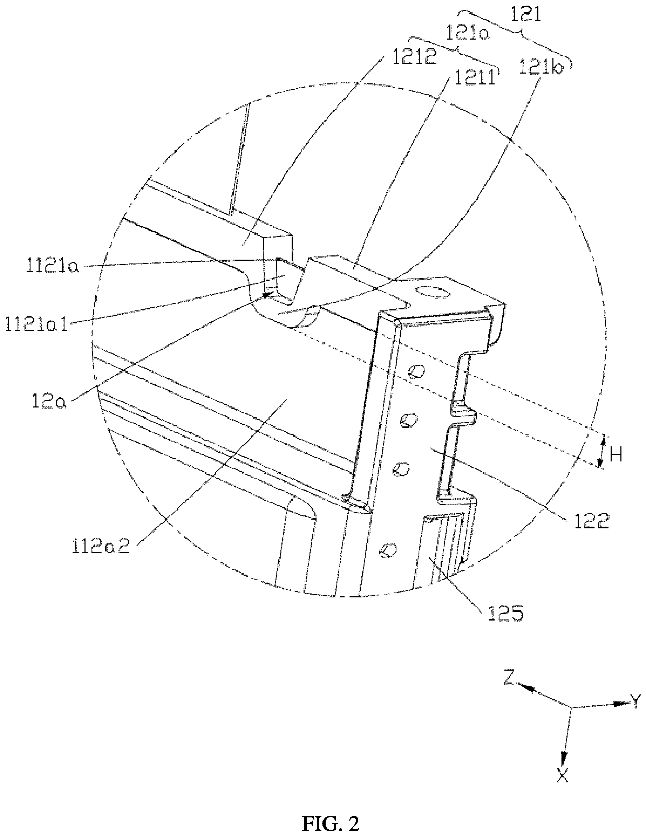

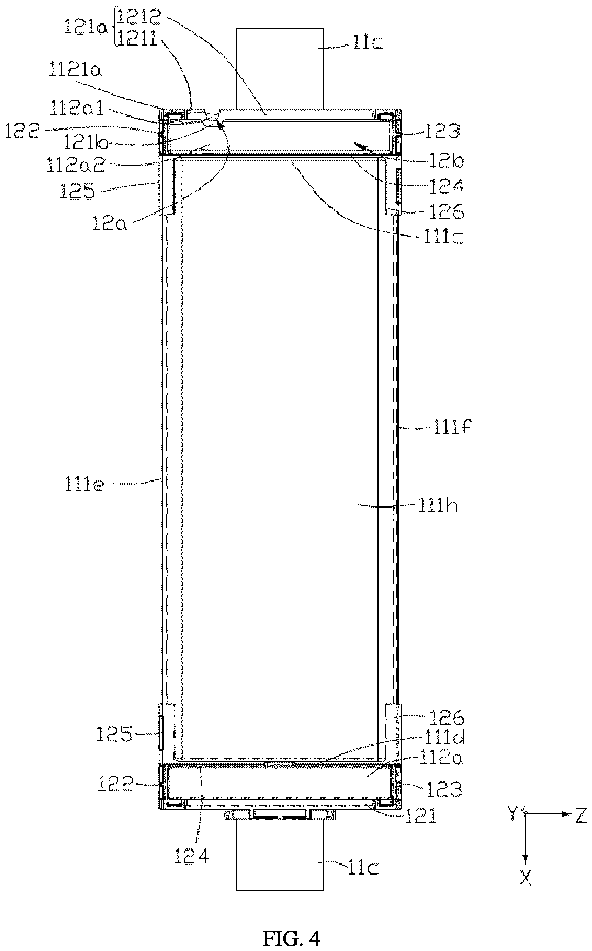

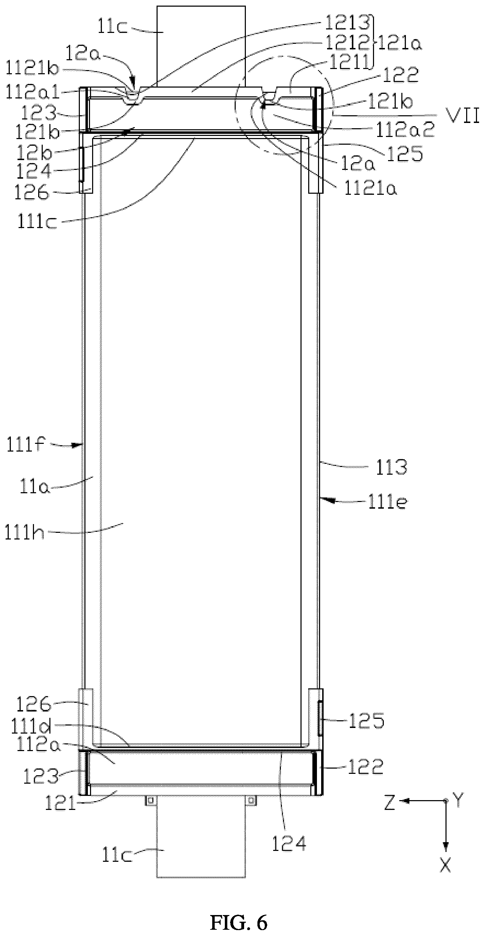

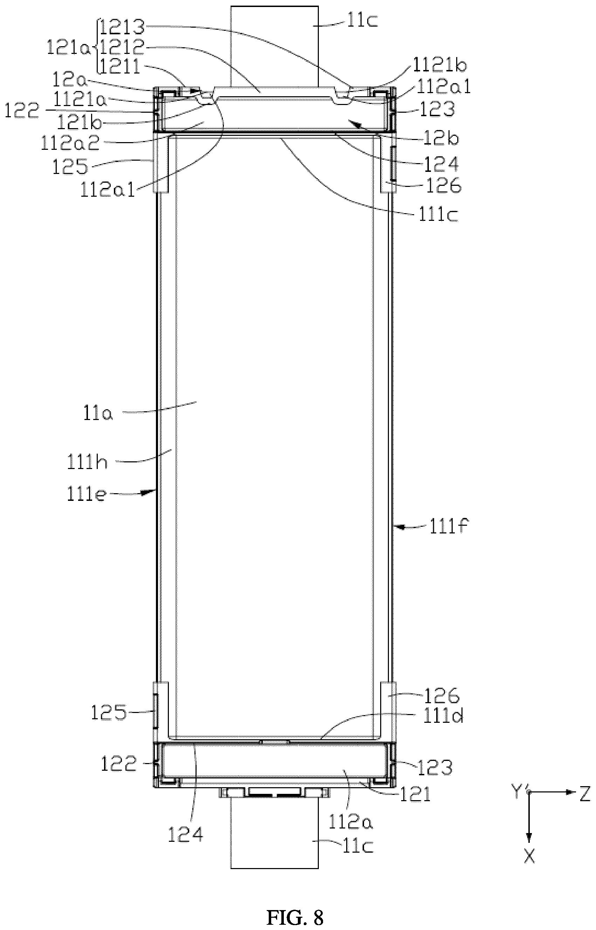

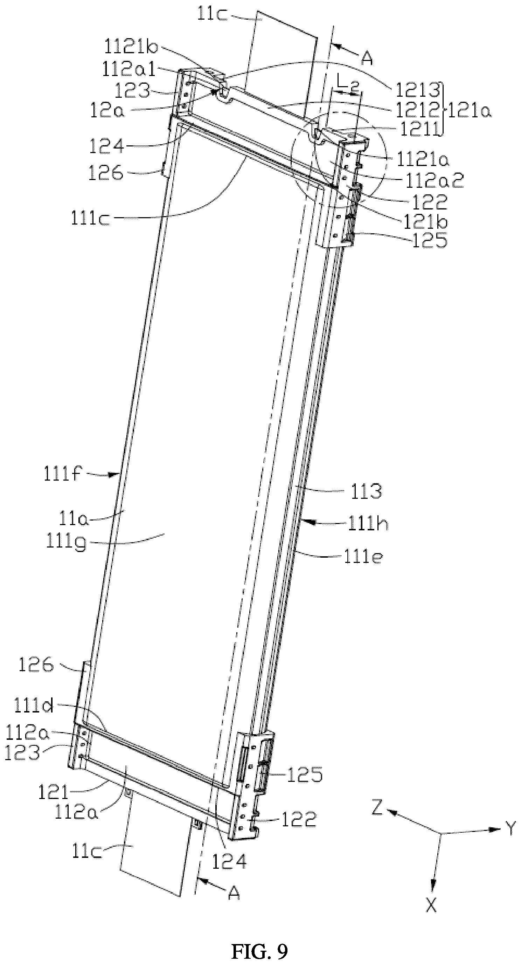

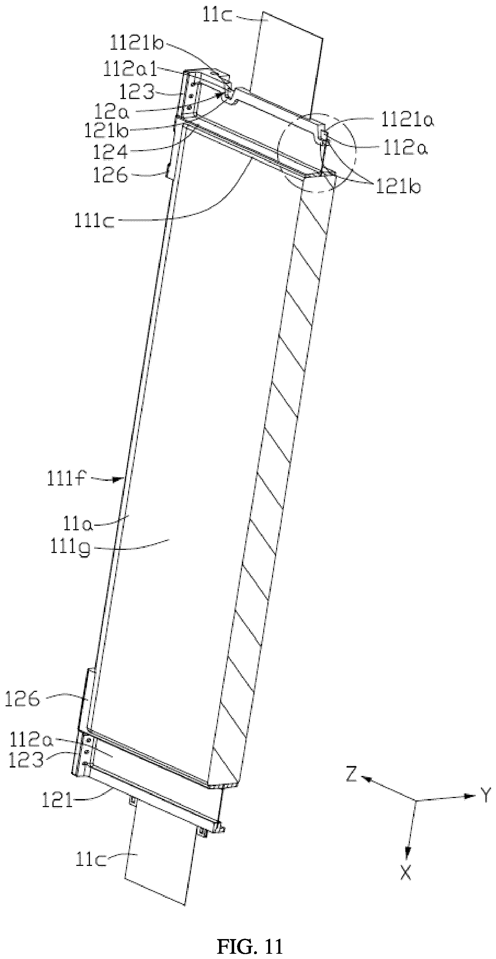

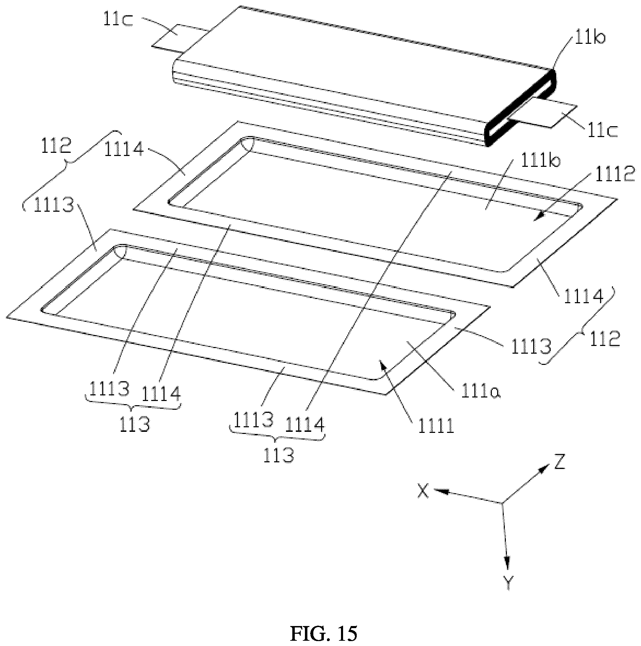

Referring to FIG. 1 to FIG. 15, an embodiment of this application provides a cell unit 10. The cell unit 10 includes a cell 11 and a bracket 12, where the bracket 12 is connected to the cell 11. The cell 11 includes a cell housing 11a, an electrode assembly 11b, and an electrode terminal 11c. The electrode terminal 11c is connected to the electrode assembly 11b and is extend out of the cell housing 11a. The cell housing 11a includes a body portion 111 and a first sealing part 112. The electrode assembly 11b is disposed in the body portion 111. The first sealing part 112 includes a first connection portion 112a. The electrode terminal 11c extends out of the cell housing 11a from the first connection portion 112a.

The bracket 12 includes a first portion 121. The first portion 121 and the body portion 111 are arranged along the first direction X. The first portion 121 covers a part of the first connection portion 112a. The electrode terminal 11c extends from the first portion 121. The first connection portion 112a includes a first end face 1121, and the first end face 1121 includes a first region 1121a. The first portion 121 includes a first section 121a and a second section 121b. The first section 121a covers a part of the first end face 1121 and a part of an outer surface of the first connection portion 112a. The second section 121b is connected to the first section 121a. The first region 1121a is located outside the second section 121b. When viewed along the second direction Y, the first section 121a and the second section 121b form a notch 12a, the notch 12a is facing away from the body portion 111, and the first region 1121a is located in the notch 12a. The first direction X is perpendicular to the second direction Y.

In this application, the first portion 121 covers a part of the first connection portion 112a to enhance protection for the first sealing part 112 and improve the airtightness of the cell 11. The first region 1121a is located in the notch 12a, the second section 121b is connected to the first section 121a, and the first region 1121a is located outside the second section 121b; and therefore, when the cell 11 swells, pressure in the cell 11 first causes an impact on the second section 121b, making the second section 121b protrude in a direction away from the first connection portion 112a, and then the pressure in the cell 11 can be relieved through the first region 1121a in the notch 12a, thereby facilitating pressure relief and improving the safety of the cell unit 10.

In some embodiments, when viewed along a direction Y' opposite to the second direction Y, the first section 121a and the second section 121b form a notch 12a, the notch 12a is facing away from the body portion 111, and the first region 1121a is located in the notch 12a, where the first connection portion 112a can be rushed away by air pressure in the cell housing 11a in the second direction Y, facilitating pressure relief.

In some embodiments, when viewed along the second direction Y, the second section 121b is disposed between the first region 1121a and the body portion 111 along the first direction X, facilitating pressure relief.

In some embodiments, along the first direction X, the second section 121b exceeds the first section 121a, facilitating pressure relief.

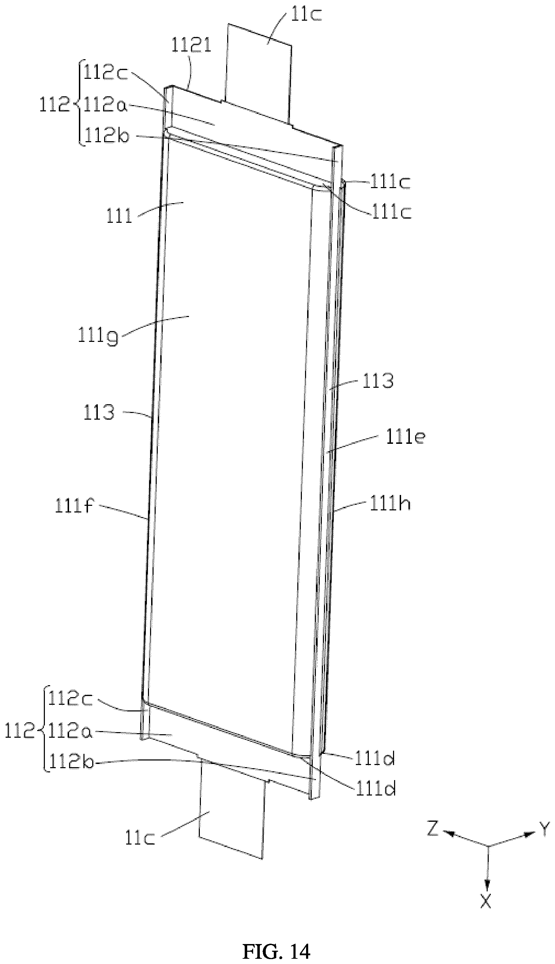

Referring to FIG. 14 to FIG. 15, in some embodiments, the body portion 111 is provided with an accommodating space, and the body portion 111 includes a first housing 111a and a second housing 111b, the first housing 111a is provided with a first recess 1111, and the second housing 111b is provided with a second recess 1112. The first housing 111a is connected to the second housing 111b to form the accommodating space. The electrode assembly 11b is partially disposed in the first recess 1111 and partially disposed in the second recess 1112. A periphery of the first housing 111a extends outward to form a first extension side 1113. A periphery of the second housing 111b extends outward to form a second extension side 1114. After the first housing 111a is connected to the second housing 111b, the first extension side 1113 and the second extension side 1114 overlap and are hermetically connected.

In some embodiments, the body portion 111 is provided with an accommodating space, and the body portion 111 includes a first housing 111a and a second housing 111b, where the first housing 111a is provided with a first recess 1111, and the second housing 111b is flat. The first housing 111a is connected to the second housing 111b to form the accommodating space. The electrode assembly 11b is disposed in the first recess 1111.

In some embodiments, the first extension side 1113 and the second extension side 1114 overlap and are hermetically connected to form two first sealing parts 112 and two second sealing parts 113. The two first sealing parts 112 are arranged along the first direction X. The two second sealing parts 113 are arranged along the third direction Z. One first sealing part 112 is connected to the two second sealing parts 113, and the other first sealing part 112 is connected to the two second sealing parts 113.

In some embodiments, the cell 11 includes two electrode terminals 11c, where one electrode terminal 11c extends out of the cell housing 11a from one first sealing part 112, and the other electrode terminal 11c extends out of the cell housing 11a from the other first sealing part 112.

In some embodiments, the body portion 111 includes a first wall 111c, a second wall 111d, a third wall 111e, a fourth wall 111f, a fifth wall 111g, and a sixth wall 111h. The first wall 111c and the second wall 111d are arranged along the first direction X. One first sealing part 112 is connected to the first wall 111c, and the other first sealing part 112 is connected to the second wall 111d. The third wall 111e and the fourth wall 111f are arranged along the third direction Z. One second sealing part 113 is connected to the third wall 111e, and the other second sealing part 113 is connected to the fourth wall 111f. The fifth wall 111g and the sixth wall 111h are arranged along the second direction Y.

In some embodiments, the body portion 111 includes two first walls 111c, two second walls 111d, and two first sealing parts 112. One first wall 111c is connected to a fifth wall 111g and one first sealing part 112, and the other first wall 111c is connected to a sixth wall 111h and one first sealing part 112. One second wall 111d is connected to the fifth wall 111g and the other first sealing part 112, and the other second wall 111d is connected to the sixth wall 111h and the other first sealing part 112. One electrode terminal 11c extends out of the cell housing 11a from one first sealing part 112, and the other electrode terminal 11c extends out of the cell housing 11a from the other first sealing part 112.

When viewed along the first direction X, in the second direction Y, the two first walls 111c are located on two opposite sides of the first sealing part 112. When viewed along a direction opposite to the first direction X, in the third direction Z, the two second walls 111d are located on two opposite sides of the second sealing part 113.

In some embodiments, the cell housing 11a includes a protective layer, a metal layer, and a polymer layer stacked in sequence. The protective layer is used to protect the metal layer, reduces the risk of damage to the metal layer caused by an external force, and also can slow down air permeation from an external environment. The metal layer may be an aluminum foil layer or a steel foil layer. The polymer layer has a property of being fused after heated, and can be used for packaging and sealing. In some embodiments, a metal layer at a first end face 1121 formed by cutting the cell housing 11a is exposed. In this application, the first region 1121a is located outside the second section 121b, so that whether the cell housing 11a is damaged during injection molding can be detected through the first region 1121a.

Referring to FIG. 1 to FIG. 4, in some embodiments, the first section 121a includes a first subsection 1211 and a second subsection 1212, and the first subsection 1211 and the second subsection 1212 are spaced apart along the third direction Z. The second section 121b connects the first subsection 1211 and the second subsection 1212, and the electrode terminal 11c extends out of the second subsection 1212. The first subsection 1211, the second subsection 1212, and the second section 121b form a notch 12a.

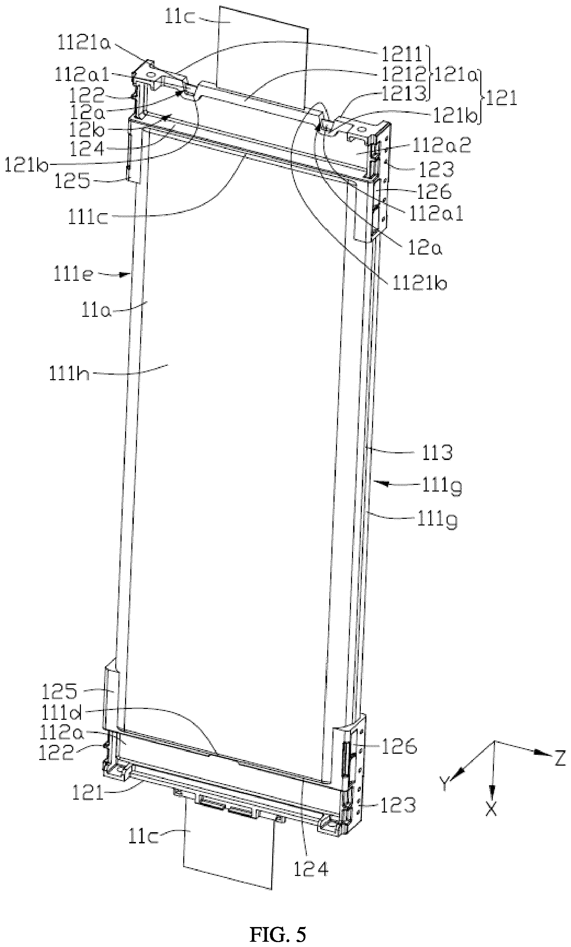

Referring to FIG. 5 to FIG. 8, in some embodiments, the first connection portion 112a includes two second sections 121b. When viewed along the second direction Y, the first section 121a and the second section 121b form two notches 12a. In the third direction Z, the electrode terminal 11c is located between the two notches 12a.

In some embodiments, the first section 121a includes a first subsection 1211, a second subsection 1212, and a third subsection 1213. The second subsection 1212 and the third subsection 1213 are spaced apart along the third direction Z. The second subsection 1212 is located between the first subsection 1211 and the third subsection 1213. The electrode terminal 11c extends out of the second subsection 1212. One second section 121b connects the first subsection 1211 and the second subsection 1212 to form one notch 12a. The other second section 121b connects the second subsection 1212 and the third subsection 1213 to form one notch 12a. When viewed along the second direction Y, the electrode terminal 11c is located between the two notches 12a along the third direction Z. The first end face 1121 includes a second region 1121b, and the second region 1121b is located in the other notch 12a. The provision of the two notches 12a further facilitates pressure relief and in turn further improves the safety of the cell unit 10.

In some embodiments, when viewed along the second direction Y, the second section 121b is a U-shaped structure.

In some embodiments, when viewed along the second direction Y, the notch 12a is a U-shaped structure.

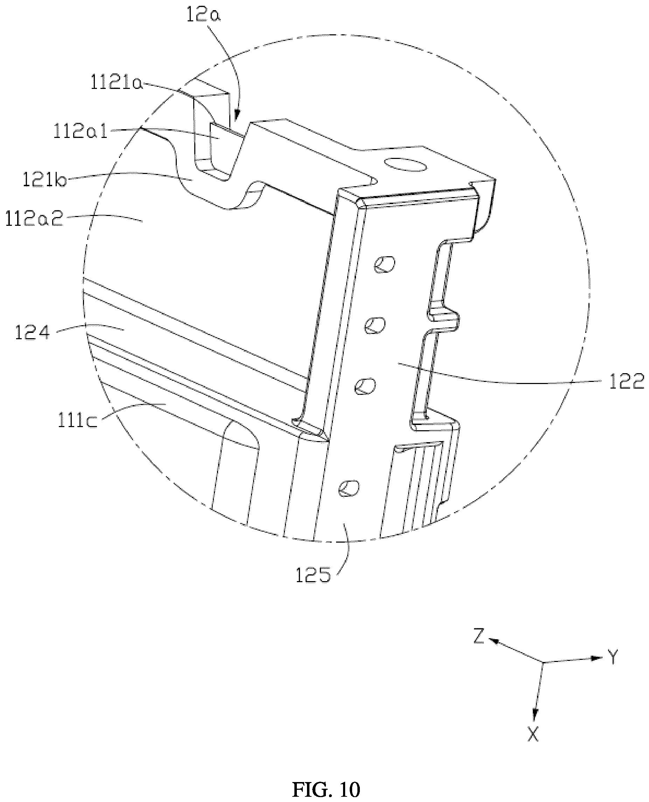

Referring to FIG. 10, FIG. 12, and FIG. 13, in some embodiments, in the first direction X, a distance d1 between the second section 121b and the body portion 111 is less than a distance d2 between the first section 121a and the body portion 111. Therefore, when the cell 11 swells, pressure in the cell 11 can first act on the second section 121b, facilitating pressure relief.

In some embodiments, the second section 121b includes a first segment 1214 and a second segment 1215. Along the second direction Y, the first segment 1214 and the second segment 1215 are disposed on two sides of the first connection portion 112a. When the cell 11 does not swell, the first segment 1214 and the second segment 1215 are clamped on two sides of the first connection portion 112a to enclose part of the first connection portion 112a.

In some embodiments, the first segment 1214 and the second segment 1215 are configured to receive air pressure in the cell 11 and protrude in a direction away from the first connection portion 112a, so that the air pressure in the cell 11 passes through the first connection portion 112a between the first segment 1214 and the second segment 1215, moves to the first connection portion 112a in the notch 12a, and is discharged to the external environment through the first region 1121a, thereby implementing pressure relief.

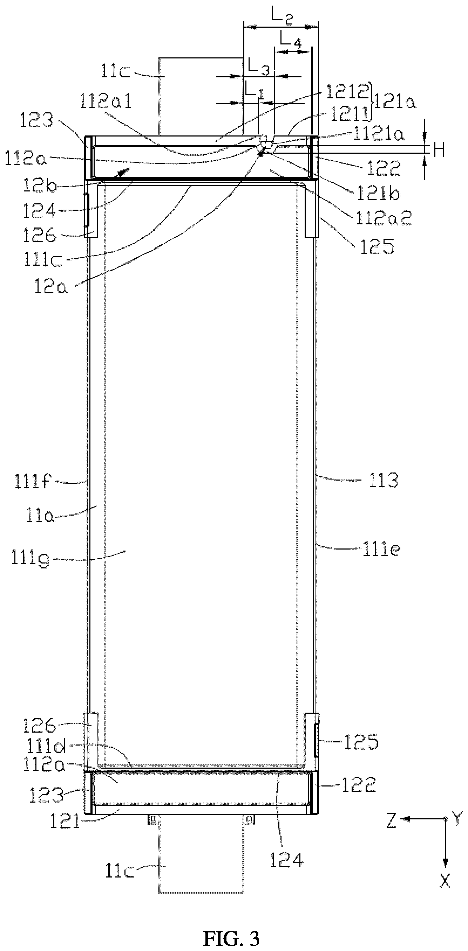

Referring to FIG. 3, in some embodiments, along the first direction X, a distance H from a side of the second section 121b facing away from the first section 121a to the first section 121a satisfies H≥2 mm, which helps the pressure in the cell 11 to first act on the first segment 1214 and the second segment 1215, so that the first segment 1214 and the second segment 1215 protrude, thereby facilitating pressure relief.

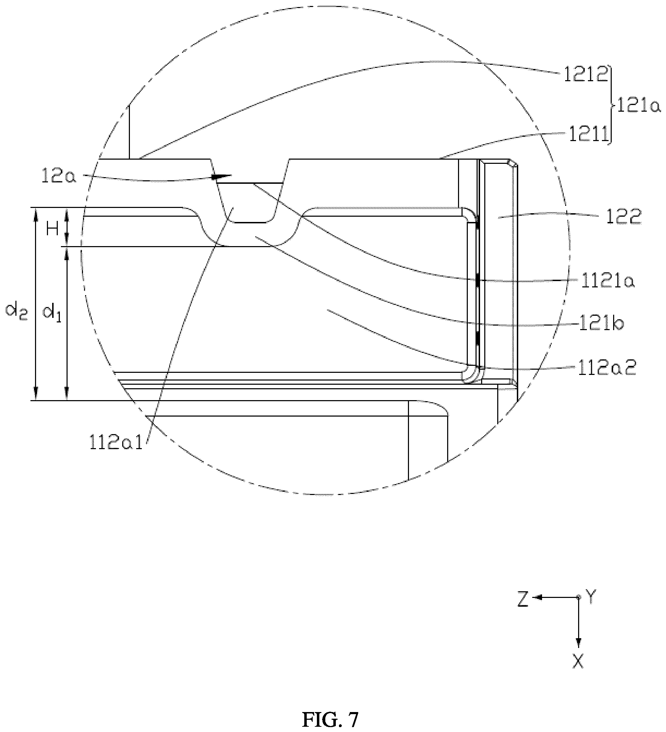

Referring to FIG. 3 and FIG. 7, in some embodiments, when viewed along the second direction Y, a width of the notch 12a along the third direction Z gradually decreases along the first direction X, which helps to increase an accommodating space of the notch 12a, so that the notch can accommodate more of the first connection portion 112a and first region 1121a, thereby further facilitating pressure relief and improving the safety of the cell unit 10.

Referring to FIG. 1, FIG. 2, and FIG. 4, in some embodiments, the first sealing part 112 includes a first folded portion 112b and a second folded portion 112c, and the first connection portion 112a is connected to the first folded portion 112b and the second folded portion 112c. The first folded portion 112b and the second folded portion 112c are spaced apart along the third direction Z.

In some embodiments, the bracket 12 includes a first side portion 122 and a second side portion 123, and the first portion 121 connects the first side portion 122 and the second side portion 123. The first side portion 122 and the second side portion 123 are spaced apart along the third direction Z. The first side portion 122 covers the first folded portion 112b, and the second side portion 123 covers the second folded portion 112c.

When viewed along the second direction Y, the first connection portion 112a is partially located between the body portion 111 and the first portion 121 along the first direction X, and the first connection portion 112a is partially located between the first side portion 122 and the second side portion 123 in the third direction Z. The bracket 12 covers a part of the first sealing part 112 to enhance protection for the first sealing part 112. The first connection portion 112a is partially disposed between the body portion 111 and the first portion 121 and between the first side portion 122 and the second side portion 123 to provide an expansion space for the first sealing part 112, thereby facilitating pressure relief.

In some embodiments, along the third direction Z, a distance between the electrode terminal 11c and the notch 12a is L₁. Specifically, a distance between a side of the electrode terminal 11c close to the notch 12a and a side of the notch 12a close to the electrode terminal 11c is L₁. Along the third direction Z, a distance between the electrode terminal 11c and the first side portion 122 is L₂. Specifically, a distance between a side of the electrode terminal 11c close to the first side portion 122 and a side of the first side portion 122 away from the electrode terminal 11c is L₂. L₁<1/2L₂, which reduces damage to the electrode terminal 11c caused by air pressure relieved from the first region 1121a in the notch 12a and reduces the risk of affecting connection to an adjacent electrode terminal 11c.

In some embodiments, a distance L₃ between the notch 12a and the electrode terminal 11c is less than a distance L₄ between the notch 12a and the first side portion 122, so that more heat is produced at the electrode terminal 11c, further facilitating pressure relief.

In some embodiments, the bracket 12 includes a second portion 124, and the second portion 124 covers a part of the first wall 111c to protect the body portion 111. An end of the first portion 121 is connected to the first side portion 122, and another end is connected to the second side portion 123; and an end of the second portion 124 is connected to the first side portion 122, and another end is connected to the second side portion 123. This further enhances the structural strength of the bracket 12, further facilitating the protection for the first sealing part 112. The second portion 124 is spaced apart from the second section 121b.

In some embodiments, when viewed along the second direction Y, the second portion 124, the first portion 121, the first side portion 122, and the second side portion 123 enclose a first space 12b; and the first connection portion 112a is partially located in the first space 12b. A periphery of the first connection portion 112a is protected by the first portion 121, the first side portion 122, the second side portion 123, and the second portion 124, reducing influence of swelling of the cell 11 on sealing performance of the first sealing part 112.

In some embodiments, when viewed along the second direction Y, the first space 12b is a closed space, facilitating pressure relief of the cell 11.

In some embodiments, when viewed along the second direction Y, the first connection portion 112a includes a first connection region 112a1 connected to the first end face 1121, first connection region 112a1 located in the notch 12a, facilitating pressure relief of the cell 11.

In some embodiments, when viewed along the second direction Y, the first connection portion 112a includes a second connection region 112a2 located in the first space 12b, and the first connection region 112a1 is spaced apart from the second connection region 112a2, facilitating pressure relief of the cell 11.

In some embodiments, when viewed along the first direction X, in the second direction Y, the second portion 124 does not exceed the body portion 111, and the second portion 124 is located between the fifth wall 111g and the sixth wall 111h. The second portion 124 does not exceed the fifth wall 111g in the second direction Y The second portion 124 does not exceed the sixth wall 111h in the second direction Y. When adjacent cell housings 11a are in contact connection, a gap is present between adjacent second portions 124, reducing influence of pressure mutually applied by the adjacent cell housings 11a on the second portion 124 and reducing an acting force on the first sealing part 112, thereby facilitating protection for the first sealing part 112 and facilitating connection stability between the bracket 12 and the cell 11.

In some embodiments, when viewed along the first direction X, in the second direction Y, the first side portion 122 does not exceed the body portion 111, and the second side portion 123 does not exceed the body portion 111. When adjacent cell housings 11a are in contact connection, a gap is present between adjacent first side portions 122, and a gap is present between adjacent second side portions 123, reducing influence of pressure mutually applied by the adjacent cell housings 11a on the first side portions 122 and the second side portions 123 and reducing an acting force on the first sealing part 112, thereby facilitating protection for the first sealing part 112 and facilitating connection stability between the bracket 12 and the cell 11.

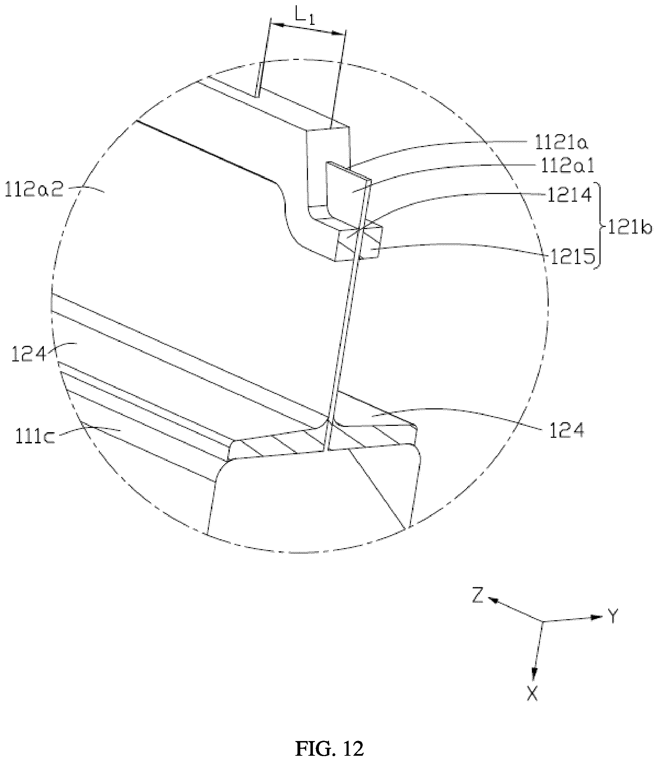

Referring to FIG. 12, in some embodiments, the electrode assembly 11b is a wound structure, and the electrode assembly 11b includes a first straight section 1115, a second straight section 1116, a first bent section 1117, and a second bent section 1118. The first straight section 1115 is connected to the first bent section 1117 and the second bent section 1118, and the second straight section 1116 is connected to the first bent section 1117 and the second bent section 1118. Along the third direction Z, a projection of the fifth wall 111g covers a projection of the first straight section 1115, a projection of the sixth wall 111h covers the projection of the first straight section 1115; the projection of the fifth wall 111g covers a projection of the second straight section 1116; and the projection of the sixth wall 111h covers the projection of the second straight section 1116, facilitating uniform pressure application between the cells 11, thereby further prolonging the service life of the cells 11.

In some embodiments, along the third direction Z, a projection of the first side portion 122 and a projection of the first bent section 1117 overlap, the projection of the first side portion 122 is spaced apart from the projection of the first straight section 1115, and the projection of the first side portion 122 is spaced apart from the projection of the second straight section 1116, facilitating pressure relief of the cell 11.

In some embodiments, along the third direction Z, a projection of the second side portion 123 and a projection of the second bent section 1118 overlap, the projection of the second side portion 123 is spaced apart from the projection of the first straight section 1115, and the projection of the second side portion 123 is spaced apart from the projection of the second straight section 1116, facilitating pressure relief of the cell 11.

Referring to FIG. 1, in some embodiments, the bracket 12 includes a first extension portion 125, the first extension portion 125 extends from the first side portion 122, and the first extension portion 125 covers at least a part of the third wall 111e. The first extension portion 125 can protect the third wall 111e and the second sealing part 113, enhancing the connection strength between the bracket 12 and the cell 11.

In some embodiments, the bracket 12 includes a second extension portion 126, the second extension portion 126 extends from the second side portion 123, and the second extension portion 126 covers at least a part of the fourth wall 111f. The second extension portion 126 can protect the fourth wall 111f and the second sealing part 113, enhancing the connection strength between the bracket 12 and the cell 11.

In some embodiments, the bracket 12 is integrally formed with the cell 11, facilitating the connection strength between the bracket 12 and the cell 11. Optionally, the bracket 12 is integrally formed with the cell 11 through low-pressure injection molding.

In some embodiments, the bracket 12 is an insulating bracket, which can reduce the risk of a short circuit in the cell 11.

In some embodiments, the cell unit 10 includes two brackets 12, where one bracket 12 is connected to part of one first sealing part 112, and the other bracket 12 is connected to part of the other first sealing part 112. One electrode terminal 11c extends out of the first sealing part 112 and the bracket 12 along the first direction X, and the other electrode terminal 11c extends out of the second sealing part 113 and the bracket 12 along a direction opposite to the first direction X.

In some embodiments, the electrode terminals 11c located on a same side of two adjacent cell units 10 are connected to each other; one of the two adjacent brackets 12 of the cell unit 10 is provided with a notch 12a; and the bracket 12 of the other cell unit 10 is provided with no notch 12a.

In some embodiments, the electrode terminals 11c located on a same side of two adjacent cell units 10 are connected to each other, and two adjacent brackets 12 are each provided with the notch 12a.

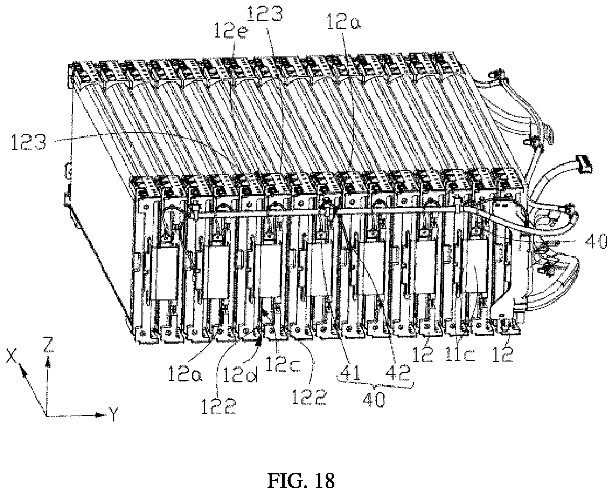

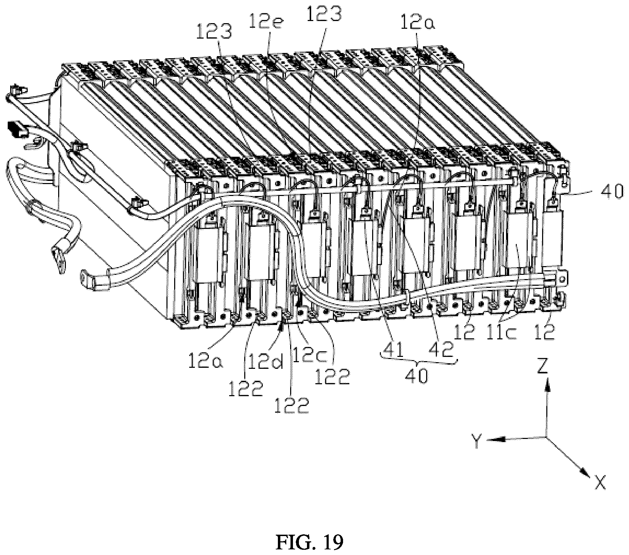

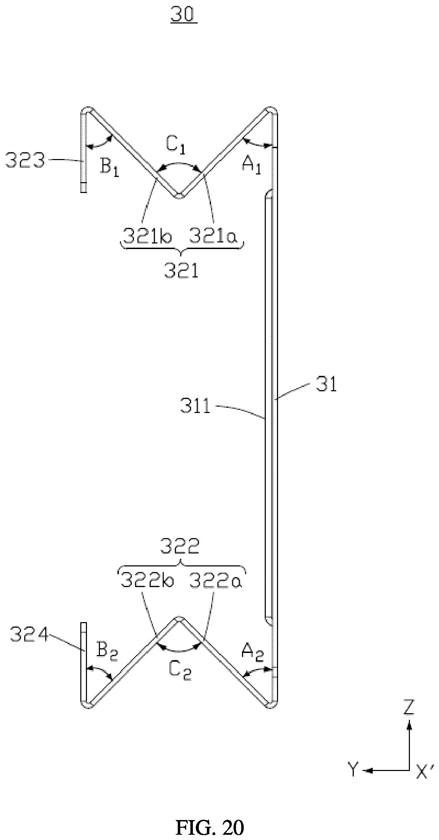

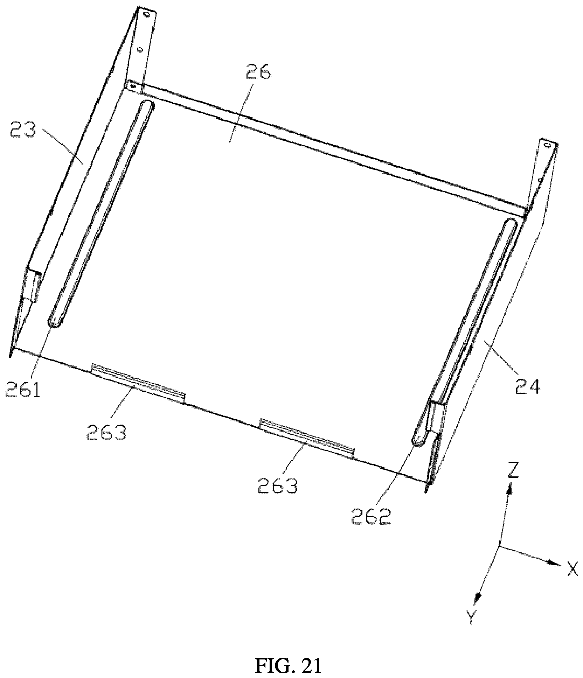

Referring to FIG. 18 to FIG. 21, an embodiment of this application provides a battery pack 100 including a plurality of cell units 10 arranged along a second direction Y and a housing 20, where the plurality of cell units 10 are disposed in the housing 20.

In some embodiments, when disposed in the housing 20, the cell units 10 are in a pressurized state.

In some embodiments, body portions 111 of adjacent cell housings 11a are in contact connection, facilitating pressurization of the body portions 111.

In some embodiments, the body portions 111 of the adjacent cell housings 11a apply pressure to each other, so the plurality of cell units 10 are in a pressurized state, which is conducive to prolonging the service life of the cell units 10.

In some embodiments, when viewed along the first direction X, in the second direction Y, the first portion 121 is located between the fifth wall 111g and the sixth wall 111h. A first gap 12c is present between the first portions 121 on adjacent cells 11. By virtue of the first gap 12c, adjacent brackets 12 are spaced apart, and when the body portions 111 of the adjacent cells 11 apply pressure to each other, force applied to the first sealing part 112 can be reduced, and protection for the first sealing part 112 is enhanced.

In some embodiments, when viewed along the first direction X, in the third direction Z, the first side portion 122 does not exceed the first extension portion 125, and a second gap 12d is formed between adjacent first side portions 122. When the adjacent cell housings 11a are in contact connection and apply pressure to each other, the second gap 12d between the two adjacent first side portions 122 can reduce an acting force applied to the first side portions 122 and reduce an acting force applied to the first sealing part 112, facilitating the protection for the first sealing part 112.

In some embodiments, when viewed along the first direction X, in a direction opposite to the third direction Z, the second side portion 123 does not exceed the second extension portion 126, and a third gap 12e is formed between adjacent second side portions 123. When the adjacent cell housings 11a are in contact connection and apply pressure to each other, the third gap 12e between the two adjacent second side portions 123 can reduce an acting force applied to the second side portions 123 and thus further reduce an acting force applied to the first sealing part 112, further facilitating the protection for the first sealing part 112.

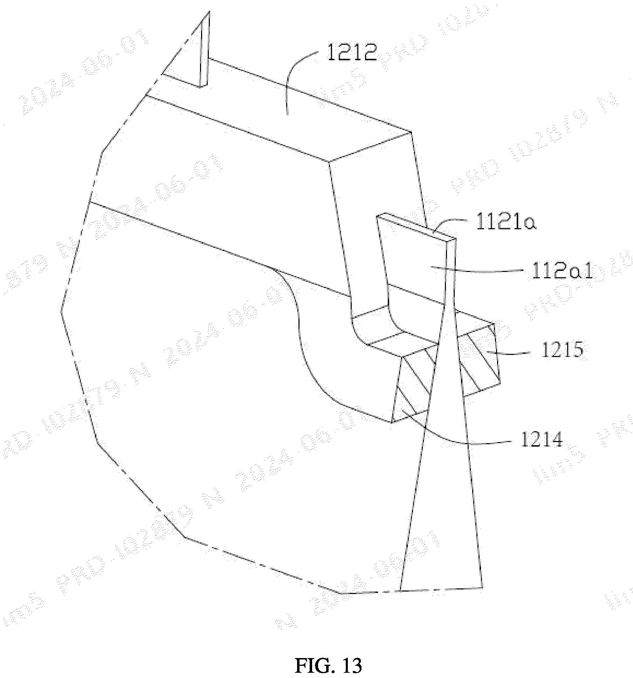

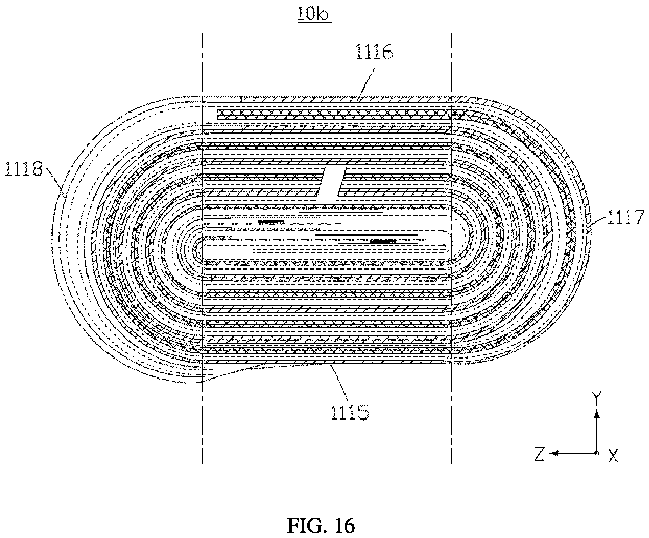

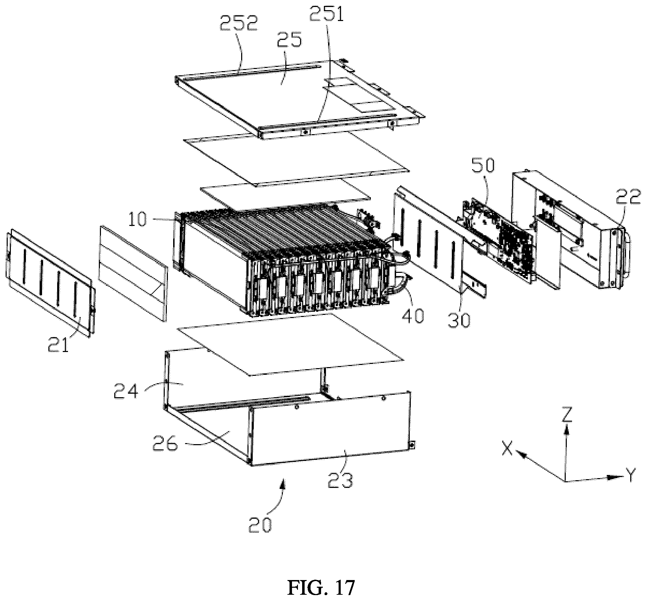

Referring to FIG. 13 to FIG. 17, in some embodiments, the battery pack 100 further includes an elastic member 30; the elastic member 30 is disposed between the cell units 10 and the housing 20; and the elastic member 30 can apply pressure to the plurality of cell units 10, to make the plurality of cell units 10 be in a pressurized state.

In some embodiments, the housing 20 includes a left wall 21, a right wall 22, a front wall 23, a rear wall 24, a top wall 25, and a bottom wall 26. The left wall 21 and the right wall 22 are arranged along the second direction Y. The front wall 23 and the rear wall 24 are arranged along the first direction X. The bottom wall 26 and the top wall 25 are arranged along the third direction Z. The left wall 21 is connected to the front wall 23, the rear wall 24, the top wall 25 and the bottom wall 26, and the right wall 22 is connected to the front wall 23, the rear wall 24, the top wall 25 and the bottom wall 26, to form an accommodating space. The plurality of cell units 10 and the elastic member 30 are disposed in the accommodating space. The plurality of cell units 10 and the elastic member 30 are arranged along the second direction Y.

In some embodiments, the bottom wall 26 is provided with a first limiting portion 261 and a second limiting portion 262, where the first limiting portion 261 extends along the second direction Y, and the second limiting portion 262 extends along the second direction Y The first limiting portion 261 and the second limiting portion 262 are arranged along the first direction X. The first limiting portion 261 and the second limiting portion 262 protrude from the bottom wall 26 along the third direction Z. When the bracket 12 is disposed in the housing 20, the bracket 12 is located between the first limiting portion 261 and the second limiting portion 262. When the cell 11 swells, the first limiting portion 261 and the second limiting portion 262 can limit movement of the bracket 12 along the first direction X, which helps the bracket 12 to move along the second direction Y

In some embodiments, the top wall 25 is provided with a third limiting portion 251 and a fourth limiting portion 252, where the third limiting portion 251 extends along the second direction Y, and the fourth limiting portion 252 extends along the second direction Y. The third limiting portion 251 and the fourth limiting portion 252 are arranged along the first direction X. The first limiting portion 261 and the third limiting portion 251 are arranged along the third direction Z. The second limiting portion 262 and the fourth limiting portion 252 are arranged along the third direction Z. The third limiting portion 251 and the fourth limiting portion 252 protrude from a surface of the top wall 25 facing the bottom wall 26 along a direction opposite to the third direction Z. When the bracket 12 is disposed in the housing 20, the bracket 12 is located between the third limiting portion 251 and the fourth limiting portion 252. When the cell 11 swells, the third limiting portion 251 and the fourth limiting portion 252 can limit movement of the bracket 12 along the first direction X, which helps the bracket 12 to move along the second direction Y

In some embodiments, the elastic member 30 includes a base portion 31 and a folded portion 32, where the base portion 31 is connected to the folded portion 32, and the folded portion 32 is fixedly connected to the housing 20. The base portion 31 is configured to be able to apply pressure to the cell unit 10, and the folded portion 32 is configured to provide a swelling space for the cell unit 10.

In some embodiments, when the cell 11 does not swell, the elastic member 30 applies no pressure to the cell unit 10; and when the cell 11 swells, the cell 11 compresses the elastic member 30, and the elastic member 30 applies pressure to the cell 11.

In some embodiments, when the cell 11 does not swell, the elastic member 30 applies pressure to the cell 11; and when the cell 11 swells, the cell 11 compresses the elastic member 30, and the elastic member 30 applies higher pressure to the cell 11.

In some embodiments, the base portion 31 is connected to a body portion 111 of an outermost cell 11. The base portion 31 is provided with a plurality of protrusions 311 spaced apart along the first direction X, where a side of the base portion 31 facing the body portion 111 is recessed away from the body portion 111 to form the protrusions 311, enhancing the structural strength of the base portion 31 and reducing the risk of deformation of the base portion 31 due to uneven force applied to the base portion 31.

In some embodiments, the folded portion 32 includes a first folded portion 321 and a second folded portion 322 arranged along a direction opposite to the third direction Z, where the first folded portion 321 is connected to one side of the base portion 31, and the second folded portion 322 is connected to another side of the base portion 31. The first folded portion 321 and the second folded portion 322 can act on the cell unit 10 through the base portion 31. The first folded portion 321 and the second folded portion 322 can provide a swelling space for the cell unit 10.

In some embodiments, the elastic member 30 includes a first connection section 323; the first connection section 323 is connected to a side of the first folded portion 321 facing away from the base portion 31; the first connection section 323 is fixed to the housing 20; and the first folded portion 321 is fixed to the housing 20 through the first connection section 323, so that an acting force applied to the folded portion 32 can be transferred to the housing 20.

In some embodiments, the first connection section 323 is parallel to the base portion 31, facilitating deformation of the elastic member 30 in the second direction Y.

In some embodiments, the elastic member 30 includes a second connection section 324; the second connection section 324 is connected to a side of the second folded portion 322 facing away from the base portion 31; the second connection section 324 is fixed to the housing 20; and the second folded portion 322 is fixed to the housing 20 through the second connection section 324, so that an acting force applied to the folded portion 32 can be transferred to the housing 20. For example, fixation is implemented through welding, adhesion, abutting, clamping, screwing, and the like.

In some embodiments, the second connection section 324 is parallel to the base portion 31, facilitating deformation of the elastic member 30 in the second direction Y

In some embodiments, the top wall 25 is provided with a first fixing portion (not shown in the figure). Along the second direction Y, a projection of the first connection section 323 and a projection of the first fixing portion overlap, and the first connection section 323 is fixed to the first fixing portion.

In some embodiments, the bottom wall 26 is provided with a second fixing portion 263. Along the second direction Y, a projection of the first connection section 323 and a projection of the second fixing portion 263 overlap, and the first connection section 323 is fixed to the second fixing portion 263. For example, fixation is implemented through welding, adhesion, abutting, clamping, screwing, and the like.

In some embodiments, the structural strength of the top wall 25 is higher than the structural strength of the elastic member 30, reducing the risk of deformation of the top wall 25 caused by an acting force applied to the first folded portion 321.

In some embodiments, the structural strength of the bottom wall 26 is higher than the structural strength of the elastic member 30, reducing the risk of deformation of the bottom wall 26 caused by an acting force applied to the first folded portion 321.

In some embodiments, the top wall 25 is thicker than the thickest one of the base portion 31, the first folded portion 321, and the first connection section 323, enhancing the structural strength of the top wall 25 and reducing the risk of deformation of the top wall 25 caused by an acting force applied to the first folded portion 321.

In some embodiments, the bottom wall 26 is thicker than the thickest one of the base portion 31, the first folded portion 321, and the first connection section 323, enhancing the structural strength of the bottom wall 26 and reducing the risk of deformation of the bottom wall 26 caused by an acting force applied to the first folded portion 321.

In some embodiments, the first folded portion 321 includes a first folded section 321a and a second folded section 321b, where the first folded section 321a is connected to the base portion 31, and the second folded section 321b is connected to the first folded section 321a and the first connection section 323. The first folded section 321a and the base portion 31 form a first included angle A₁, the second folded section 321b and the first connection section 323 form a second included angle B₁, and the first folded section 321a and the second folded section 321b form a third included angle C₁, where A₁≥B₁, helping to enhance the capability of the first folded section 321a in resisting deformation and helping to reduce the risk of deformation of the elastic member 30 in the second direction Y

In some embodiments, C₁>A₁, helping to improve the uniformity of deformation of the first folded portion 321.

In some embodiments, C₁=2B₁=2A₁, helping to further improve the uniformity of the deformation of the first folded portion 321.

In some embodiments, the second folded portion 322 includes a third folded section 322a and a fourth folded section 322b, where the third folded section 322a is connected to the base portion 31, and the fourth folded section 322b is connected to the third folded section 322a and the second connection section 324. The third folded section 322a and the base portion 31 form a first included angle A₂, the fourth folded section 322b and the second connection section 324 form a second included angle B₂, and the third folded section 322a and the fourth folded section 322b form a third included angle C₂, where A₂≥B₂, helping to enhance the capability of the third folded section 322a in resisting deformation and helping to reduce the risk of deformation of the elastic member 30 in the second direction Y

In some embodiments, C₂>A₂, helping to improve the uniformity of deformation of the first folded portion 321.

In some embodiments, C₂=2B₂=2A₂, helping to further improve the uniformity of the deformation of the first folded portion 321.

In some embodiments, the first folded portion 321 and the second folded portion 322 are the same in structure, facilitating the uniformity of stress and deformation.

Optionally, the second folded portion 322 is disposed at a same angle as the first folded portion 321. When stressed, the first folded portion 321 and the second folded portion 322 can be stressed uniformly and deform uniformly, reducing the risk of rotation of the elastic member 30 caused by non-uniform deformation. Optionally, A₁=A₂, B₁=B₂, and C₁=C₂.

Referring to FIG. 1, in some embodiments, the battery pack 100 includes a circuit board 50, where the circuit board 50 is disposed between the elastic member 30 and the right wall 22. The circuit board 50 is connected to a sampling assembly 40 and capable of receiving data acquired by the sampling assembly 40. The circuit board 50 includes a BMS (Battery Management System) module. The BMS module includes a plurality of electronic components. The plurality of electronic components can achieve the functions such as control, protection, communication, power calculation, signal transmission, and electrical energy transmission for the cell 11. Optionally, the circuit board 50 includes a flexible printed circuit (FPC, Flexible Printed Circuit). Optionally, the circuit board 50 includes a printed circuit board (FCB, Printed Circuit Board), and the circuit board 50 is provided with a plurality of wires (not shown in the figure).

In some embodiments, the battery pack 100 includes a sampling assembly 40. The sampling assembly 40 is connected to any one of the electrode terminals 11c of two adjacent cells 11 connected in a folded manner. The sampling assembly 40 can acquire at least one of voltage, current, or temperature of each cell 11.

In some embodiments, the sampling assembly 40 includes a sampling member 41 and a sampling wire 42. The sampling wire 42 is connected to the sampling member 41 and the circuit board 50. The sampling member 41 is connected to any one of the electrode terminals 11c of two adjacent cells 11 connected in a folded manner. Optionally, the sampling member 41 is welded to the electrode terminal 11c. Along the first direction X, a projection of the sampling member 41 is spaced apart from a projection of the notch 12a, which can reduce influence on the sampling member 41 during pressure relieving.

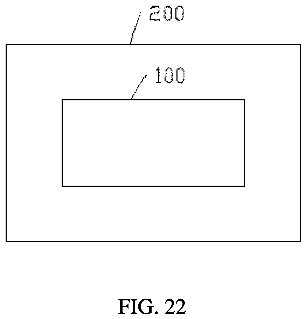

Referring to FIG. 22, this application further provides an electric device 200 using the foregoing battery pack 100. In an embodiment, the electric device 200 in this application may be, but is not limited to, an electronic device, a drone, a backup power source, an electric vehicle, an electric motorcycle, an electric motor bicycle, an electric tool, or a large household battery pack.

Persons of ordinary skill in the art should appreciate that some foregoing embodiments are for description of this application only but not for limiting this application. Appropriate modifications and variations made to some foregoing embodiments without departing from the essential spirit and scope of this application all fall within the scope of this application.

## Claims

1. A cell unit (10), comprising:
a cell (11), the cell (11) comprises an electrode assembly (11b), a cell housing (11a), and an electrode terminal (11c), the electrode terminal (11c) is connected to the electrode assembly (11b) and extends out of the cell housing (11a);
the cell housing (11a) comprises a body portion (111) and a first sealing part (112), the electrode assembly (11b) is disposed in the body portion (111), the first sealing part (112) comprises a first connection portion (112a), and the electrode terminal (11c) extends out of the cell housing (11a) from the first connection portion (112a); and
a bracket (12), wherein the bracket (12) comprises a first portion (121), the first portion (121) and the body portion (111) are arranged along a first direction (X), the first portion (121) covers a part of the first connection portion (112a), and the electrode terminal (11c) extends out of the first portion (121); wherein
the first connection portion (112a) comprises a first end face (1121), and the first end face (1121) comprises a first region (1121a);
the first portion (121) comprises a first section (121a) and a second section (121b); the first section (121a) covers a part of the first end face (1121) and a part of an outer surface of the first connection portion (112a); the second section (121b) is connected to the first section (121a); the first region (1121a) is located outside the second section (121b);
when viewed along a second direction (Y), the first section (121a) and the second section (121b) form a notch (12a), the notch (12a) is facing away from the body portion (111), and the first region (1121a) is located in the notch (12a); and
the first direction (X) is perpendicular to the second direction (Y).

2. The cell unit (10) according to claim 1, wherein the first section (121a) comprises a first subsection (1211) and a second subsection (1212); the first subsection (1211) and the second subsection (1212) are spaced apart along a third direction (Z);
the second section (121b) connects the first subsection (1211) and the second subsection (1212);
the electrode terminal (11c) extends out of the second subsection (1212);
the first direction (X), the second direction (Y), and the third direction (Z) are perpendicular to each other.

3. The cell unit (10) according to any one of claims 1 and 2, wherein when viewed along the second direction (Y), the second section (121b) is disposed between the first region (1121a) and the body portion (111) along the first direction (X).

4. The cell unit (10) according to any one of claims 1 to 3, wherein the first sealing part (112) comprises a first folded portion (112b) and a second folded portion (112c); the first connection portion (112a) connects the first folded portion (112b) and the second folded portion (112c); the first folded portion (112b) and the second folded portion (112c) are spaced apart along a third direction (Z); and
the bracket (12) comprises a first side portion (122) and a second side portion (123) arranged along the third direction (Z); the first portion (121) connects the first side portion (122) and the second side portion (123); the first side portion (122) covers the first folded portion (112b); the second side portion (123) covers the second folded portion (112c);
when viewed along the second direction (Y), the first connection portion (112a) is partially located between the first side portion (122) and the second side portion (123) in the third direction (Z).

5. The cell unit (10) according to any one of claims 1 to 4, wherein the second section (121b) comprises a first segment (1214) and a second segment (1215); and along the second direction (Y), the first segment (1214) and the second segment (1215) are disposed on two sides of the first connection portion (112a).

6. The cell unit (10) according to claim 5, wherein the first segment (1214) and the second segment (1215) are configured to protrude in a direction away from the first connection portion (112a) when receiving pressure from inside of the cell (11).

7. The cell unit (10) according to claim 4, wherein the body portion (111) comprises a first wall (112c); the first connection portion (112a) is connected to the first wall(112c); the bracket (12) comprises a second portion (124); the second portion (124) covers a part of the first wall(112c); and
the second portion (124) is spaced apart from the second section (121b).

8. The cell unit (10) according to claim 7, wherein when viewed along the second direction (Y), the second portion (124), the first portion (121), the first side portion (122), and the second side portion (123) enclose a first space (12b); and the first connection portion (112a) is partially located in the first space (12b).

9. The cell unit (10) according to claim 8, wherein when viewed along the second direction (Y), the first space (12b) is a closed space.

10. The cell unit (10) according to any one of claims 1 to 9, wherein when viewed along the second direction (Y), the first connection portion (112a) comprises a first connection region (112a1) connected to the first end face (1121), the first connection region (112a1) is located in the notch (12a).

11. The cell unit (10) according to any one of claims 1 to 10, wherein along the first direction (X), the second section (121b) exceeds the first section (121a).

12. The cell unit (10) according to any one of claims 1 to 11, wherein when viewed along a direction opposite to the second direction (Y), the first section (121a) and the second section (121b) form a notch (12a), the notch (12a) is facing away from the body portion (111), and the first region (1121a) is located in the notch (12a).

13. A battery pack (100), comprising a housing (20) and a plurality of cell units (10) disposed in the housing (20), wherein each cell unit is the cell unit according to any one of claims 1 to 12.

14. The battery pack (100) according to claim 13, wherein the battery pack (100) comprises a sampling member (41) connected to the electrode terminal (11c); and along the first direction (X), a projection of the notch (12a) is spaced apart from a projection of the sampling member (41).

15. An electric device (200), comprising the battery pack (100) according to any one of claims 13 and 14.
